# EUROPEAN PATENT SPECIFICATION

(11) **EP 0 472 474 B1**
(45) Date of publication and mention of the grant of the patent: **24.01.1996**
(21) Application number: 91402309.8
(22) Date of filing: 23.08.1991
(51) Int. Cl.: C08H 5/04

(54) **Method for preparing a liquefied solution of ligno-cellulose substance with polyhydric alcohols**
Verfahren zur Herstellung einer Lösung von lignozellulosehaltigen Materialien mit Polyalkoholen
Procédé de préparation d'une solution de substances lignocellulosiques avec des polyalcools

(30) Priority: 24.08.1990 JP 223386/90
(43) Date of publication of application: 26.02.1992
(73) Proprietor: Rengo Co., Ltd., Osaka-shi Osaka-fu (JP); Shiraishi, Nobuo, Sakyo-ku, Kyoto-shi, Kyoto-fu (JP)
(72) Inventor: Shiraishi, Nobuo, Sakyo-ku, Kyoto-shi, Kyoto-fu (JP); Shirakawa, Kinichi, Osaka-fu (JP); Kurimoto, Yasuzi, Sakyo-ku, Kyoto-shi, Kyoto-fu (JP)
(74) Representative: Gillard, Marie-Louise

(56) References cited:
- DD-A- 136 845
- PATENT ABSTRACTS OF JAPAN vol. 12, no. 223 (C-507)(3070) 24 June 1988 & JP-A- 63 017 961
- WORLD PATENTS INDEX LATEST Section Ch, Week 9042, Derwent Publications Ltd., London, GB; Class E, AN 90-317485 (42) & JP-A-2 227 434
- PATENT ABSTRACTS OF JAPAN vol. 10, no. 377 (C-392)(2434) 16 December 1986 & JP-A- 61 171 701
- WORLD PATENTS INDEX LATEST Section Ch, Week 8720, Derwent Publications Ltd., London, GB; Class H, AN 87-139981 (20) & JP- A-62 079 230

## Description

### BACKGROUND OF THE INVENTION

### 1. Industrial field:

The present invention relates to a method for efficiently preparing wood liquefied solutions useful as various resin materials by liquefying and dissolving ligno-cellulose substance such as wood directly into polyethylene glycol, polypropylene glycol, glycerin, ethylene glycol, 1,4-butanediol, 1,6-hexanediol, polycaprolactone and other polyhydric alcohols.

As is well known, there has been an increasing demand for development of a method for more effectively utilizing forest resources which are recyclables, while in the industrial fields using wood as materials such as pulp and timber industries, it is urgently needed to establish a method for effectively utilizing wood refuse or waste. Moreover, ligno-cellulose substance contained in agricultural refuse such as rice straw, husk, has not been heretofore sufficiently utilized, and development of effective utilization thereof has been also eagerly desired. The invention intends to disclose an effective utilization method of such ligno-cellulose.

### 2. Prior art:

As one of utilizations of ligno-cellulose substance including wood, the Japanese Patent Publication (examined) No. 1988-1992 has proposed a method for using a wood liquefied solution which is obtained to serve as resin materials by liquefying and dissolving a certain chemically modified ligno-cellulose substance such as wood chemically modified by introducing a kind of substitutional group to at least a part of hydroxyl groups (chemically modified wood) into an organic solvent. The compound used as the solvent, however, has no reactivity, giving high-molecular weight substances, that is, polycondensed or polymerization reactivity, and therefore it was necessary to remove the solvent used in the liquefying and dissolving reaction or to add an additional a third reactive substance to accomplish preparation of resin.

Later, as a solvent for liquefying or dissolving a chemically modified wood, phenols came to be employed, and a technique for obtaining a type of phenol-formaldehyde resin was developed, and successively for the purpose of moderating the liquefying and dissolving conditions, phenolysis was forced to be attained simultaneously with liquefying and dissolving processes. In succession, several attempts such as developing phenol-formaldehyde resin composite as an adhesive with superiority in solubility, making them into fibers, or forming them into foam materials, have been proposed and filed in the form of patent applications (Japanese Patent Publication ( examined) No. 1988-67564, Japanese Laid-Open Patent Publication (unexamined) No. 1985-206883, Japanese Patent Publication (examined) No. 1990-6851, Japanese Laid-Open Patent Publication (unexamined) No. 1986-171744, etc.).

Thereafter, a technique for liquefying and dissolving chemically modified wood in polyhydric alcohol was proposed, and a technique for preparing polyurethane, epoxy, other resin moldings, foams and adhesives from the solution thus obtained were developed and filed for patents (Japanese Laid-Open Patent Publication (unexamined) Nos. 1986-171701, 1986-171763, 1986-215675 to 79, etc.).

On the other hand, based upon examinations on the effect of the degree of chemical modification in chemically modified wood upon liquefaction and dissolution, it was recognized by the inventors that even the ligno-cellulose substances without chemical modification such as untreated wood can be easily liquefied and dissolved with phenols or bisphenols by heating under high pressure at a high temperature of 200 to 260°C (Japanese Laid-Open Patent Publication (unexamined) No. 1986-261358). Subsequently, it was also recognized that the untreated wood and the other ligno-cellulose substances can be liquefied and dissolved in polyhydric alcohols or ketones almost in the same way (Japanese Laid-Open Patent Publication (unexamined) No. 1987-79230).

It was further proposed that ligno-cellulose substance liquefied solutions can be readily prepared by pretreating ligno-cellulose substance such as wood with halogen such as chlorination, then liquefying and dissolving the substance at a high temperature of 200 to 260°C into a treating solution containing liquefying and dissolving agent such as phenols (Japanese Laid-Open Patent Publication (unexamined) No. 1988-17961). It is now a known art to prepare adhesives or foams from solutions obtained by liquefying and dissolving wood into phenol, polyhydric alcohols, polyethylene glycol or the like by heating the wood at the high temperature (200-260°C), without chemical modification thereof (Japanese Laid-Open Patent Publication (unexamined) Nos. 1989-45440, 1989-158021 and 1989-158022).

In the conventional methods mentioned above, however, problems exist in that for liquefying and dissolving wood, it is essential requirements to heat the wood at a high temperature of 200 to 260°C, preferably 250 to 260°C and to liquefy and dissolve the wood using a pressure-proof apparatus, and the pressure during reaction may reach as high as 30 to 50 atmospheric pressures.

### SUMMARY OF THE INVENTION

It is, therefore, an object of the present invention to solve the above-discussed problems by providing a novel method for liquefying and dissolving untreated wood into polyhydric alcohols such as polyethylene glycol, polypropylene glycol, glycerin, ethylene glycol, 1,4-butanediol, 1,6-hexanediol, polycaprolactone and at a lower temperature and under normal pressure.

The invention has been made on the basis of a new finding that a. liquid or paste material of ligno-cellulose substance such as wood may be obtained by heating the ligno-cellulose substance in the presence of an acid catalyst at a relatively low temperature of above 100°C to 200°C in the presence of one or more polyhydric alcohol(s) such as polyethylene glycol, polypropylene glycol, glycerin, ethylene glycol, 1,4-butanediol, 1,6-hexanediol, polycaprolactone or the like. It is to be noted that polyhydric alcohols such as polyethylene glycol, polypropylene glycol, glycerin, ethylene glycol, 1,4-butanediol, 1,6-hexanediol, polycaprolactone or the like are reactive compounds from the viewpoint of containing a plurality of hydroxyl groups, and are suitable for use in various resin forming reactions, while wood and ligno-cellulose substances contain a large amount of hydroxyl groups in their principal component and can be involved in resin formation reaction as the case may be. Therefore, liquefied material of ligno-cellulose substance such as wood obtained in accordance with the invention can be a liquefying and dissolving system to be employed as various raw materials for resin formations, possessing potential for wide and multiple uses and applications.

The ligno-cellulose substances employed as starting materials according to the invention include ground wood such as saw dust, wood fiber, wood chips, and wood veneer wastes; plant cellulosics of straw or husk; paper or pulp of GP (ground pulp), TMP (thermomechanical pulp) and wasted paper; and every material employed heretofore in this industrial field. As for the species of trees, varieties of them are included, and typical examples include Betula, Sitka spruce, cedar, red pine, poplar and lauan. Particle size of ground materials may be acceptable as far as they are liquefied and dissolved sufficiently. Usually, saw dust with 20 to 80 meshes can be used preferably.

The polyhydric alcohol used in the invention is a bivalent or higher polyhydric alcohol such as polyethylene glycol, polypropylene glycol, glycerin, ethylene glycol, 1,4-butanediol, 1,6-hexanediol and in particular polyethylene glycol, glycerin, ethylene glycol and polycaprolactone are preferable.

For carrying out the liquefying and dissolving reaction, the mentioned alcohols may be used either independently or jointly with two or more of them properly mixed. Further, for the purpose of lowering the viscosity of the solution otherwise accelerating the liquefying and dissolving reaction, it is preferable to add water or one or more organic solvents such as monohydric alcohols, acetone, ethyl acetate or others, either from the beginning or during the liquefying and dissolving reaction. The mentioned organic solvents are added by 1 to 10 parts by weight, preferably 5 to 6 parts by weight, to 100 parts by weight of polyhydric alcohol(s). Examples of monohydric alcohol employed in this step are methyl alcohol, ethyl alcohol and n-butyl alcohol.

In the method according to the invention, it is preferable to add wood or other ligno-cellulose substance in the proportion of 10 to 1000 parts by weight to 100 parts by weight of polyhydric alcohol. Although a liquid may be obtained by addition of less than 10 parts by weight of ligno-cellulosics per 100 parts by weight of polyhydric alcohols, it is not preferable in view of practical use, particularly for preparing wooden resins. On the other hand, if the ligno-cellulosics are added excessively, liquefaction tends to be insufficient.

In the present invention, the liquefying and dissolving reaction shall mean a process of transformation from solid phase to liquid phase when a wood or other ligno-cellulose reacts with polyhydric alcohol. And this reaction according to the invention takes place under normal pressure particularly in the presence of acid catalyst. Preferable acid catalysts include mineral acids, organic acids and Lewis acids. Representative examples of these acids are sulfuric acid, hydrochloric acid, toluene sulfonic acid, phenol sulfonic acid, aluminum chloride, zinc cloride and boron trifluoride. The acid caltalyst is generally used in the following quantities: 1 to 10% by weight, based on the polyhydric alcohol(s). The reaction temperature is above 100 to 200°C, preferably above 100 to lower than 200°C, and more preferably 150 to 160°C. According to a preferred embodiment of the invention the ligno-cellulose substance is heated between above 100 and lower than 200°C in the presence of an acid catalyst and aliphatic polyhydric alcohol(s). It is preferred to perform stirring during the liquefying reaction. By such stirring a torque is applied to the suspension to raise liquefying and dissolving efficiency. The liquefying and dissolving reaction is completed in 15 minutes to several hours. The concentration of wood or ligno-cellulosics in the liquid material thereof obtained in this manner varies according to the purpose of utilization of the solution, which is permitted in a range of up to about 90% by weight.

Apparatus for dissolving reaction is not particularly limited as far as the reaction can take place, and it is usually desired to employ an apparatus having reflux means and inner wall of high acid proof. Thus, it is particularly preferred to adopt an apparatus capable of mixing the entire reaction substances sufficiently at the initial stage of liquefying and dissolving process, and stirring sufficiently in the later stage. In effect, an apparatus capable of mixing and stirring efficiently throughout the reaction period is desired, in view of acceleration of liquefying and dissolving reaction while moderating reaction conditions.

In the invention, it is also preferable that a ligno-cellulose substance is pretreated, then subject to the liquefaction reaction. As a result of such pretreatment, liquefying and dissolving reaction are performed more easily. In this respect, the pretreatment with halogen which is disclosed in Japanese Laid-Open Patent Publication (unexamined) No. 1988-17961 may be effectively applied.

In the present invention, a liquefied solution of ligno-cellulosics such as untreated wood in a polyhydric alcohol is obtained by reaction under ordinary pressure and at a temperature of above 100 to 200°C, which has been considered almost impossible in the prior art. Also it is a surprising novel finding that wood is liquefied and dissolved just by heating at a rather low temperature of above 100°C to 200°C, particularly 150 to 160°C, under normal pressure, in the presence of acid catalyst together with polyethylene glycol, polypropylene glycol, glycerin, ethylene glycol, 1,4-butanediol , 1,6-hexanediol , polycaprolactone or the like to obtain a liquid material at a high yield as high as 90% of wood liquefaction factor, which was found out for the first time by the present inventors. Because of the process performed at relatively low temperature under normal pressure, the liquefied ligno-cellulose obtained is hardly recondensed, thereby yield being improved. Thus, since the method according to the invention enables to obtain liquefied solution very easily and economically, the method is very advantageously applicable to industrial use and is now one of very useful and effective uses of ligno-cellulose substance such as wood.

### DESCRIPTION OF THE PREFERRED EMBODIMENTS

Several embodiments of the present invention are hereinafter described in detail.

### Example 1:

3 g of dried Betula powder (20 to 80 meshes) was charged into a glass flask furnished with reflux condenser, together with 9 g of polyethylene glycol (PEG 400) preliminarily mixed uniformly with 4% by weight of sulfuric acid to the whole volume, and put in an oil bath at 150°C to allow to react for 60 minutes without stirring. After termination of the reaction, the flask was lifted from the oil bath and cooled, and 150 ml of 1,4-dioxane was added for dilution. Using a glass fiber filter paper (Toyo GA 100), the diluted reaction solution was filtered, and the liquefied matter and the undissolved residue were separated. The undissolved residue was rinsed several times by using 1,4-dioxane furthermore, and after predrying, it was dried at 105°C for 4 hours, and weighed to determine the undissolved residual rate. The obtained undissolved residual rate was 10.6%.

### Examples 2 to 17:

Conforming to example 1, liquefying and dissolving operation was conducted by varying the condition as shown in Table 1. The results are shown in Table 1.

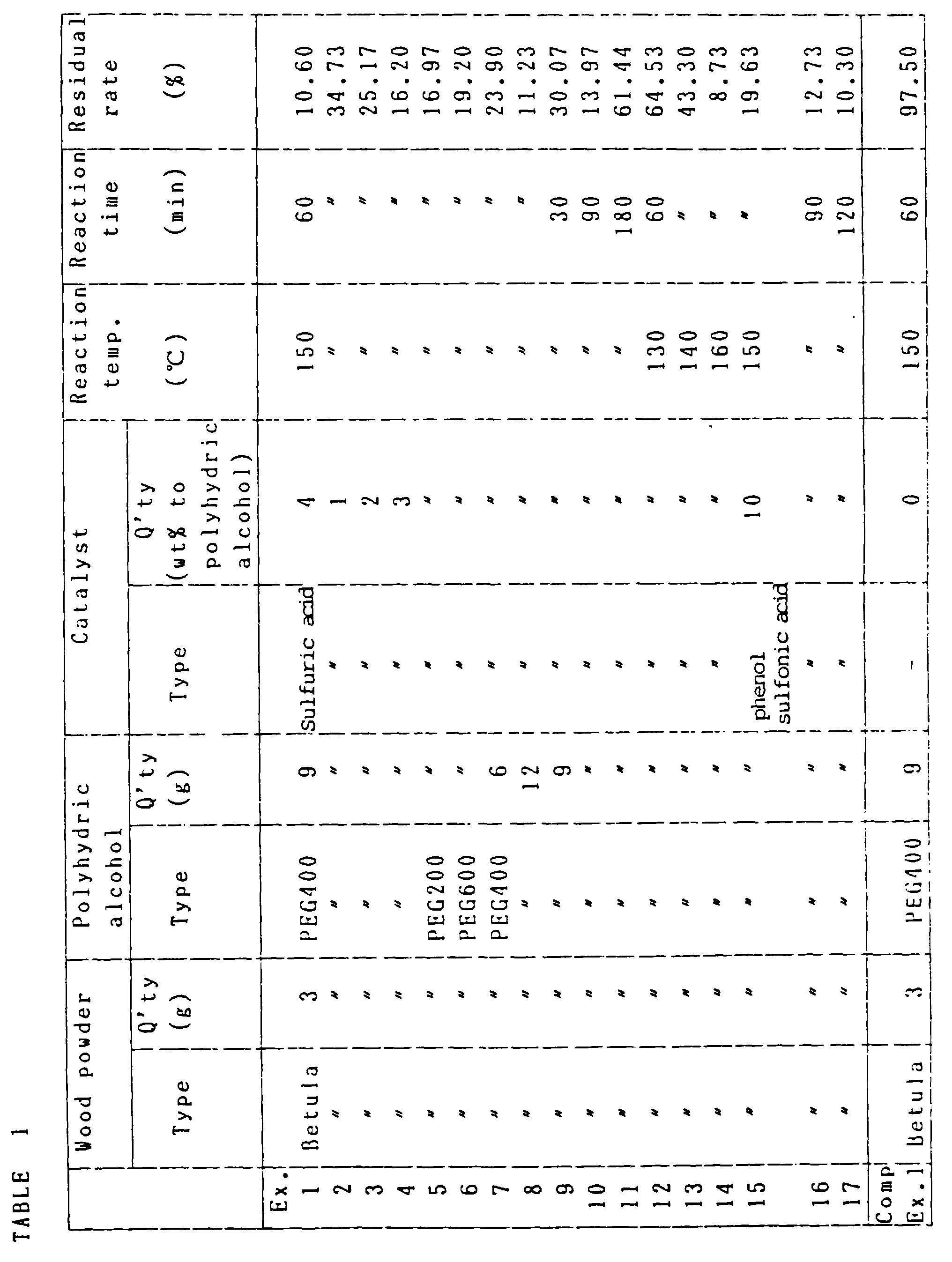

As is understood from Table 1, changes in temperature and liquefying time caused to -increase or decrease the undissolved residue. Especially recondensation of the wood components once degraded occurs, when the liquefying temperature or time becomes too high or long.

### Comparative Example 1:

Treated same as in Example 1, except that catalyst was not added. The result is shown in Table 1. The undissolved residual rate of wood was found to be 97.5%, and it was recognized that liquefaction and dissolution of wood are not promoted at all when treated without adding catalyst at this temperature.

### Example 18:

3 g of dried Betula power (20 to 80 meshes) was charged into glass flask furnished with a reflux condenser, together with 9 g of mixed solution of polyethylene glycol (PEG 400) and glycerin at a ratio by weight of 2:1 preliminarily mixed uniformly with 4% by weight of sulfuric acid to the whole volume, and was put in an oil bath at 150°C to let stand, allowing to react for 60 minutes withdut stirring. After termination of the reaction, the flask was lifted up from the oil bath to cool, and 150 ml of 1,4-dioxane was added for dilution. In succession, using glass fiber filter paper (Toyo GA 100), the diluted reaction solution was filtered, and the liquefied matter and the undissolved residue were separated. The undissolved residue was further rinsed several times with 1,4-dioxane, predried, and dried at 105°C for 4 hours, and weighed to determine the undissolved residual rate. The obtained undissolved residual rate was 4.80%. This result is shown in Table 2. Comparing Table 2 and Example 1, it is understood that the liquefaction and dissolution of wood are notably promoted by replacing a part of PEG 400 with glycerin.

### Examples 19 to 34:

Conforming to Example 18, the conditions were changed as shown in Table 2, and the wood was similarly liquefied and dissolved. The results are shown in Table 2. It is understood from the comparison between Table 1 and Table 2 that the combined use of low molecular weight polyhydric alcohols such as glycerin, ethylene glycol, diethylene glycol, diethylene glycol monomethyl ether with PEG400 causes to uniformly decrease the undissolved residual amount and the trend is enhanced as the reaction time increases. From these results, it can be said that the condensation reaction of the wood components can be suppressed even under the excessive liquefaction conditions.

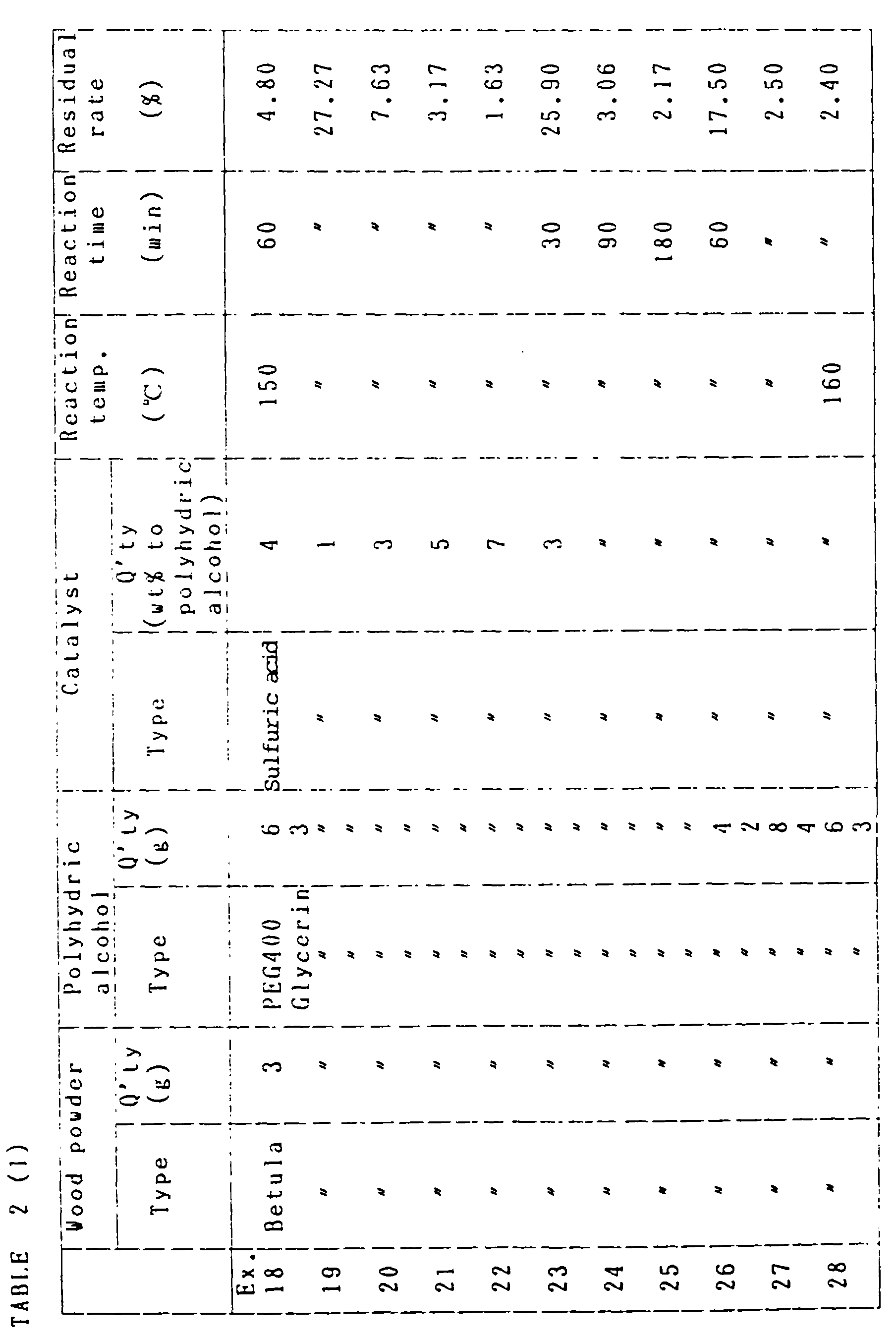

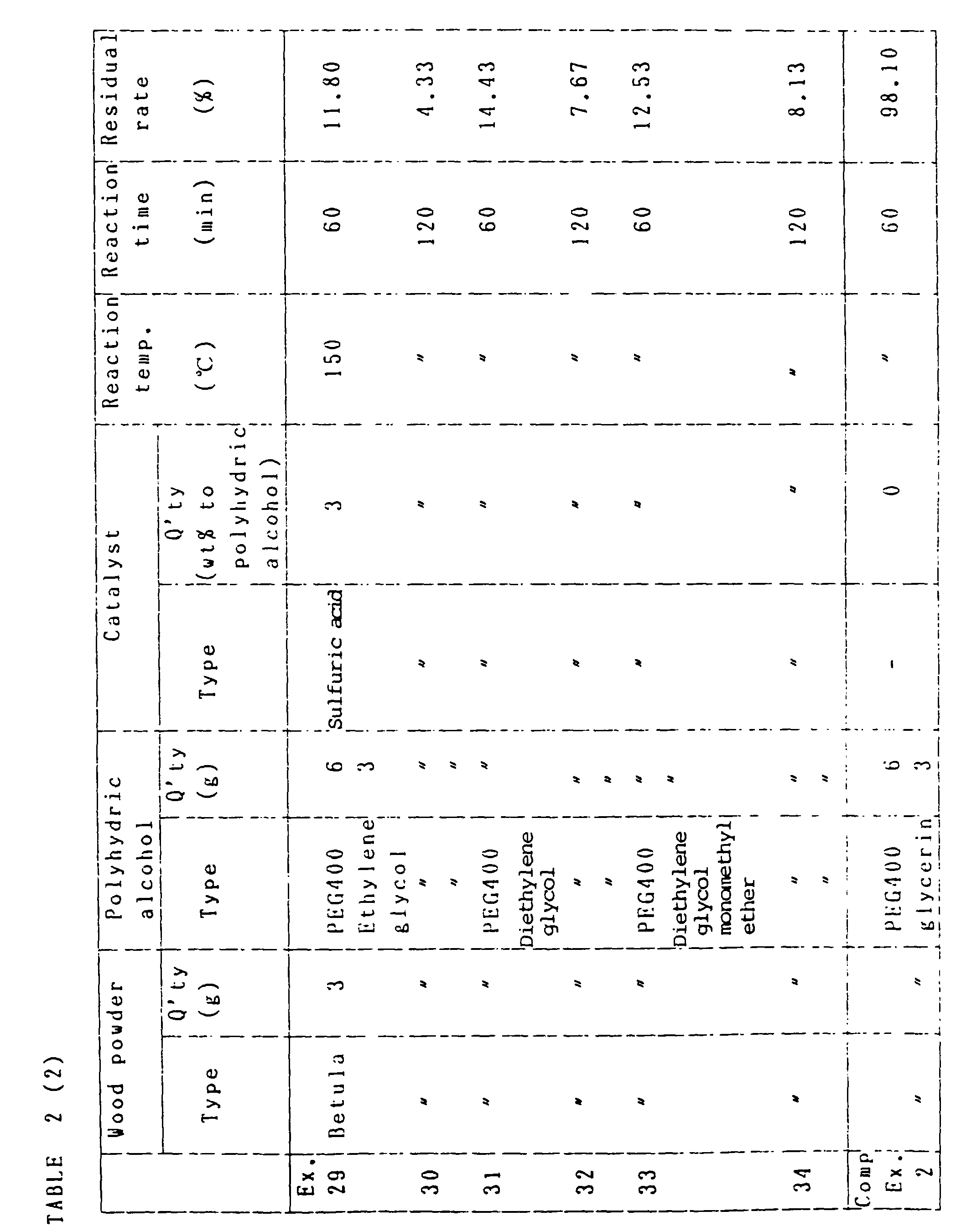

### Comparative example 2:

The wood was liquefied and dissolved in the same procedure as in Example 18, except that catalyst was not added, in a mixed solution of PEG 400 and glycerin at a ratio of 2:1. The result is also shown in Table 2. As a result, the obtained wood undissolved residual rate became to be 98.10%, and it was thus recognized that liquefaction and dissolution of wood are not promoted at all when treated at 150°C without adding catalyst even when such mixed solution is used.

### Example 35:

3 g of dried Sitka spruce (20 to 80 meshes) was charged in a glass flask equipped with a stirrer and a reflux condenser, together with 9 g of polyethylene glycol (PEG 400) preliminarily mixed uniformly with 3% by weight of sulfuric acid to the whole volume, and was put in an oil bath at 150°C and was allowed to react for 60 minutes while stirring. After termination of reaction, the flask was lifted up from the oil bath and cooled, and 150 ml of 1,4-dioxane was added for dilution. Using a glass fiber filter paper (Toyo GA 100), the diluted reaction solution was filtered, and the liquefied matter and the undissolved residue were separated. The undissolved residue was further rinsed several times in 1,4-dioxane, predried, and dried at 105°C for 4 hours, and weighed to determine the residual rate. The result is shown in Table 3. Comparing this result with Example 1, it is understood that the undissolved residual volume is decreased in spite of the low content of the sulfuric acid catalyst, which suggests ease of liquefaction and dissolution by the type of wood and promotion of liquefying and dissolving reaction by stirring.

### Examples 36 to 47:

Conforming to Example 35, liquefaction and dissolution were conducted on the conditions specified in Table 3. The results are shown in Table 3.

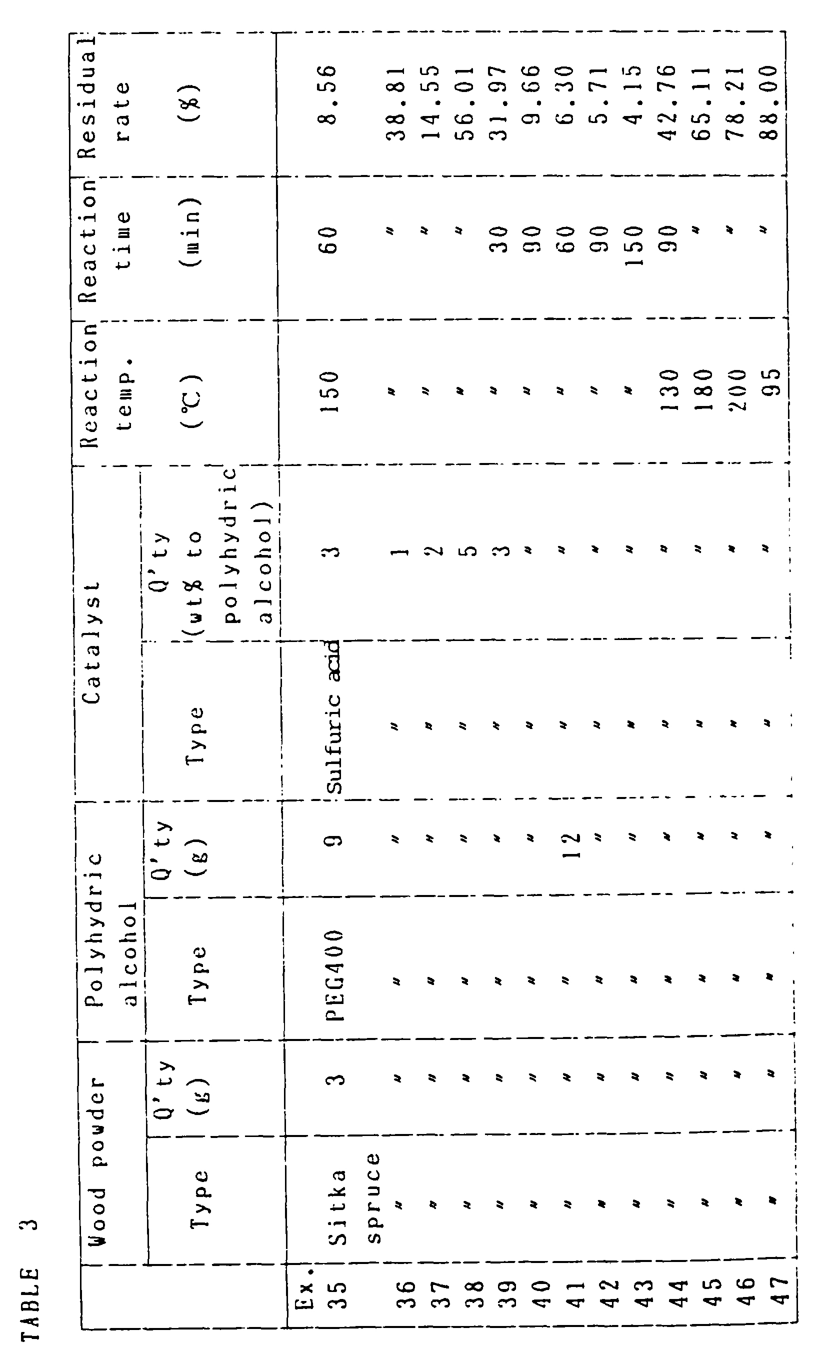

## Claims

1. A method for preparing a liquefied solution of ligno-cellulose substance comprising the step of heating ligno-cellulose substance at above 100 to 200°C in the presence of an acid catalyst and one or more polyhydric alcohol(s), the amount of the acid catalyst being 1 to 10% by weight based on the polyhydric alcohol(s) and the amount of ligno-cellulose being 10 to 1000 parts by weight to 100 parts by weight of polyhydric alcohol.

2. A method according to claim 1, wherein said polyhydric alcohol(s) is (are) aliphatic polyhydric alcohol(s), and the heating temperature is above 100 to lower than 200°C.

3. A method according to claim 1 or 2, wherein said acid catalyst is at least one of organic acid, mineral acid and Lewis acid.

4. A method according to any one of claims 1 to 3, wherein said polyhydric alcohol is chosen amongst polyethylene glycol, polypropylene glycol, glycerin, ethylene glycol, 1,4-butanediol, 1,6-hexanediol, polycaprolactone and their mixtures.

5. A method according to any one of claims 1 to 4, wherein said ligno-cellulose substance is pretreated with halogen.

6. A method according to any one of claims 1 to 5, wherein the heating is carried out at a temperature of 150-160°C.

## Patentansprüche

1. Verfahren zur Herstellung einer verflüssigten Lösung von Lignocellulosesubstanzen, das folgenden Schritt umfaßt:
Erwärmen der Lignocellulosesubstanz bei einer Temperatur größer 100 bis 200 °C in Gegenwart eines Säurekatalysators und eines Polyalkohols oder mehrerer Polyalkohole, wobei der Anteil des Säurekatalysators 1 bis 10 Gew.-%, bezogen auf den Polyalkohol/die Polyalkohole, beträgt und der Anteil der Lignocellulose 10 bis 1000 Gew.-Teile auf 100 Gew.-Teile Polyalkohol ist.

2. Verfahren nach Anspruch 1, wobei der bzw. die Polyalkohole aliphatische Polyalkohole sind und die Temperatur beim Erwärmen über 100 bis unter 200 °C ist.

3. Verfahren nach Anspruch 1 oder 2, wobei der Säurekatalysator eine organischen Säure, anorganischen Säure und/oder Lewis-Säure ist.

4. Verfahren nach einem der Ansprüche 1 bis 3, wobei der Polyalkohol unter Polyethylenglycol, Polypropylenglycol, Glycerin, Ethylenglycol, 1,4-Butandiol, 1,6-Hexandiol und Polycaprolacton und deren Gemischen ausgewählt wird.

5. Verfahren nach Anspruch 1 bis 4, wobei die Lignocellulosesubstanz mit einem Halogen vorbehandelt ist.

6. Verfahren nach Anspruch 1 bis 5, wobei das Erwärmen bei einer Temperatur von 150 bis 160 °C ausgeführt wird.

## Revendications

1. Procédé pour préparer une solution liquéfiée de substance ligno-cellulosique, comprenant l'étape de chauffage d'une substance ligno-cellulosique à une température comprise entre plus de 100 et 200°C en présence d'un catalyseur acide et d'un ou plusieurs polyols, la quantité de catalyseur acide étant de 1 à 10 % en masse par rapport au(x) polyol(s) et la quantité de ligno-cellulose étant de 10 à 1 000 parties en masse pour 100 parties en masse de polyol.

2. Procédé selon la revendication 1, dans lequel ledit polyol ou lesdits polyols est (sont) un polyol aliphatique ou des polyols aliphatiques, et la température de chauffage est supérieure à 100°C et inférieure à 200°C.

3. Procédé selon la revendication 1 ou 2, dans lequel ledit catalyseur acide est au moins un acide parmi un acide organique, un acide minéral et un acide de Lewis.

4. Procédé selon l'une quelconque des revendications 1 à 3, dans lequel ledit polyol est choisi parmi le polyéthylèneglycol, le polypropylèneglycol, la glycérine, l'éthylèneglycol, le butane-1,4-diol, l'hexane-1,6-diol, la polycaprolactone et leurs mélanges.

5. Procédé selon l'une quelconque des revendications 1 à 4, dans lequel ladite substance ligno-cellulosique est prétraitée avec un halogène.

6. Procédé selon l'une quelconque des revendications 1 à 5, dans lequel le chauffage est réalisé à une température de 150 à 160°C.
